# EUROPEAN PATENT APPLICATION

(11) **EP 4 319 041 A1**
(43) Date of publication of application: **07.02.2024**
(21) Application number: 22859515.3
(22) Date of filing: 20.10.2022
(51) Int. Cl.: H04L 9/08

(54) **CIPHER CARD AND ROOT KEY PROTECTION METHOD THEREFOR, AND COMPUTER READABLE STORAGE MEDIUM**

(30) Priority: 16.06.2022 CN 202210677374
(71) Applicant: Beijing Smartchip Semiconductor Technology Company Limited, Beijing 102200 (CN); Beijing Smartchip Microelectronics Technology Company Limited, Beijing 100192 (CN)
(72) Inventor: WU, Zhanyun, Beijing 102200 (CN); LI, Yan, Beijing 102200 (CN); YUAN, Yanfang, Beijing 102200 (CN); ZHANG, Lei, Beijing 102200 (CN); WANG, Wenqiang, Beijing 102200 (CN); GU, Siting, Beijing 102200 (CN); YANG, Feng, Beijing 102200 (CN); ZHANG, Yanjie, Beijing 102200 (CN); LI, Chaowei, Beijing 102200 (CN); GAO, Zhizhou, Beijing 102200 (CN)
(74) Representative: Meyer, Thorsten
(86) International application number: PCT/CN2022/126375
(87) International publication number: WO 2023/240866

(57) **Abstract**

The present disclosure relates to the field of information security technologies, and discloses a cryptographic module and a method for protecting a root key thereof, and a computer-readable storage medium. The cryptographic module includes a security chip and a clock chip, and the method for protecting a root key includes: generating a root key and a first root key component in response to a root key generation instruction; encrypting the root key by the first root key component to obtain a second root key component; and storing the second root key component in a protection area of the security chip, and storing the first root key component in a random access memory (RAM) area of the clock chip, where the first root key component disappears due to a power failure in the RAM area when the cryptographic module is illegally operated. In this method, the root key can be prevented from being illegally obtained, thereby ensuring security of the root key and effectively improving security of the cryptographic module.

## Description

### TECHNICAL FIELD

The present disclosure relates to the field of information security technologies, and in particular, to a cryptographic module and a method for protecting a root key thereof, and a computer-readable storage medium.

### BACKGROUND

With the rapid development of communications and computer network technologies, people increasingly depend on network environments and network information resources, and important data stored and transmitted in a large quantity of networks needs to be effectively protected. To ensure security of special data or industry data, network data needs to be transmitted through encryption. Generally, a data encryption task is mainly performed by a cryptographic module integrated in a device, for example, a mini peripheral component interconnect express (PCIE) crypto card that supports a PCIE interface.

Currently, a multi-level key mechanism is used by the cryptographic module. In this mechanism, a key may be divided into different layers. For example, the key may be divided into a root key and a lower-level key according to a function of the key, where the lower-level key is a general term for all keys except the top-layer root key in a key hierarchy, and security of each lower-level key is protected by an upper-layer key. In this dependency relationship, security of the entire multi-level key structure depends on security of the top-layer root key in the key hierarchy. Because the root key is not protected by an upper-layer key, security protection is weak. If the root key is illegally obtained, a user key protected by the root key in the cryptographic module is leaked, resulting in leakage of important information and a user loss.

### SUMMARY

The present disclosure is intended to resolve at least one of technical problems in the related art. In view of the above, a first object of the present disclosure is to provide a method for protecting a root key of a cryptographic module. A root key is encrypted and stored in a protection area of a security chip, and a first root key component used for encrypting the root key is stored in a random access memory (RAM) area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

A second objective of the present disclosure is to provide a cryptographic module.

A third object of the present disclosure is to provide a computer-readable storage medium.

To achieve the foregoing objectives, an embodiment of a first aspect of the present disclosure provides a method for protecting a root key of a cryptographic module. The cryptographic module includes a security chip and a clock chip, and the method includes: generating a root key and a first root key component in response to a root key generation instruction; encrypting the root key by the first root key component to obtain a second root key component; and storing the second root key component in a protection area of the security chip, and storing the first root key component in a RAM area of the clock chip, where the first root key component disappears due to a power failure in the RAM area when the cryptographic module is illegally operated.

According to the method for protecting a root key of a cryptographic module in this embodiment of the present disclosure, a root key is encrypted and stored in a protection area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

According to an embodiment of the present disclosure, the generating a root key and a first root key component includes: generating a first random number and a second random number; and generating the root key according to the first random number, and generating the first root key component according to the second random number.

According to an embodiment of the present disclosure, the encrypting the root key by the first root key component to obtain a second root key component includes: determining first identifier information of the security chip; processing the first root key component according to the first identifier information to obtain an intermediate key; and encrypting the root key by the intermediate key to obtain the second root key component.

According to an embodiment of the present disclosure, the method further includes: obtaining the first identifier information in response to a root key recovery instruction, obtaining the first root key component from the RAM area of the clock chip, and obtaining the second root key component from the protection area of the security chip; processing the first root key component according to the first identifier information to obtain the intermediate key; and decrypting the second root key component by the intermediate key to obtain a decrypted root key.

According to an embodiment of the present disclosure, after the generating a root key, the method further includes: determining second identifier information of the security chip; performing a hash operation on the second identifier information to obtain a hash value; and encrypting the hash value by the root key to obtain first verification data, and storing the first verification data in the protection area of the security chip.

According to an embodiment of the present disclosure, after the decrypted root key is obtained through decryption, the method further includes: obtaining the second identifier information, and performing a hash operation on the second identifier information to obtain a hash value; encrypting the hash value by the decrypted root key to obtain second verification data; and performing security verification on the decrypted root key according to the first verification data and the second verification data.

According to an embodiment of the present disclosure, the processing the first root key component according to the first identifier information to obtain the intermediate key includes: performing exclusive OR processing on the first identifier information and the first root key component to obtain the intermediate key.

To achieve the foregoing objectives, an embodiment of a second aspect of the present disclosure provides a cryptographic module. The cryptographic module includes a security chip, configured to generate a root key and a first root key component in response to a root key generation instruction, encrypt the root key by the first root key component to obtain a second root key component, and store the second root key component in a protection area of the security chip; a clock chip, configured to store the first root key component in a RAM area of the clock chip; and a power supply, configured to supply power to the clock chip, and when the cryptographic module is illegally operated, stop supplying power to the clock chip, enabling the first root key component to disappear due to a power failure in the RAM area of the clock chip.

According to the cryptographic module in this embodiment of the present disclosure, a root key is encrypted and stored in a protection area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

According to an embodiment of the present disclosure, the cryptographic module further includes a random number chip, configured to generate a first random number and a second random number. The security chip is specifically configured to generate the root key according to the first random number, and generate the first root key component according to the second random number.

According to an embodiment of the present disclosure, the security chip is specifically configured to determine first identifier information of the security chip; process the first root key component according to the first identifier information to obtain an intermediate key; and encrypt the root key by the intermediate key to obtain the second root key component.

According to an embodiment of the present disclosure, the security chip is further configured to obtain the first identifier information in response to a root key recovery instruction, obtain the first root key component from the RAM area of the clock chip, and obtain the second root key component from the protection area of the security chip; process the first root key component according to the first identifier information to obtain the intermediate key; and decrypt the second root key component by the intermediate key to obtain a decrypted root key.

According to an embodiment of the present disclosure, the security chip is further configured to determine second identifier information of the security chip; perform a hash operation on the second identifier information to obtain a hash value; and encrypt the hash value by the root key to obtain first verification data, and store the first verification data in the protection area of the security chip.

According to an embodiment of the present disclosure, the security chip is further configured to obtain the second identifier information, and perform a hash operation on the second identifier information to obtain a hash value; encrypt the hash value by the decrypted root key to obtain second verification data; and perform security verification on the decrypted root key according to the first verification data and the second verification data.

According to an embodiment of the present disclosure, the security chip is specifically configured to perform exclusive OR processing on the first identifier information and the first root key component to obtain the intermediate key.

According to an embodiment of the present disclosure, the cryptographic module further includes a protection switch, where the protection switch is configured to: when the cryptographic module is illegally operated, control the power supply to stop supplying power to the clock chip.

To achieve the foregoing objectives, an embodiment of a third aspect of the present disclosure provides a computer-readable storage medium. A program for protecting a root key of a cryptographic module is stored on the computer-readable storage medium, and the program for protecting a root key of a cryptographic module is executed by a processor to implement the foregoing method for protecting a root key of a cryptographic module.

According to the computer-readable storage medium in this embodiment of the present disclosure, by the foregoing method for protecting a root key of a cryptographic module, a root key is encrypted and stored in a protection area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

A part of additional aspects and advantages of the present disclosure is provided in the following descriptions, and the part will become apparent from the following descriptions, or may be learned from the practice of the present disclosure.

### BRIEF DESCRIPTION OF THE DRAWINGS

FIG. 1 is a flowchart of a method for protecting a root key of a cryptographic module according to an embodiment of the present disclosure.
FIG. 2 is a flowchart of a method for protecting a root key of a cryptographic module according to another embodiment of the present disclosure.
FIG. 3 is a schematic structural diagram of a cryptographic module according to an embodiment of the present disclosure.
FIG. 4 is a schematic structural diagram of a cryptographic module according to another embodiment of the present disclosure.

### DETAILED DESCRIPTION

The following describes in detail the embodiments of the present disclosure, and the examples of the embodiments are shown in the accompanying drawings. Identical or similar reference numerals represent identical or similar elements or elements having identical or similar functions. The embodiments described below with reference to the accompanying drawings are exemplary and are intended to explain the present disclosure without being construed as limiting the present disclosure.

The following describes a cryptographic module and a method for protecting a root key thereof, and a computer-readable storage medium provided in the embodiments of the present disclosure with reference to the accompanying drawings.

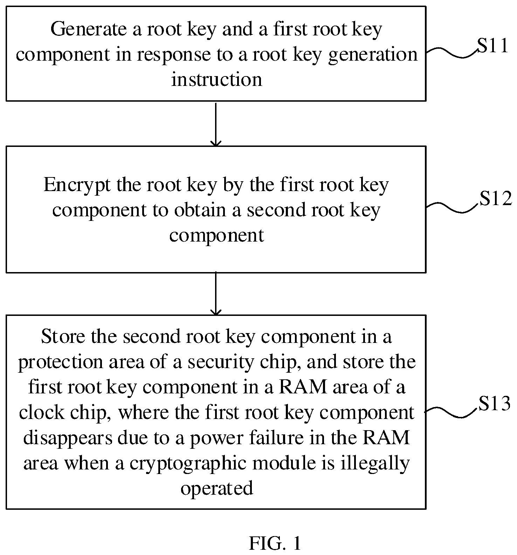

FIG. 1 is a flowchart of a method for protecting a root key of a cryptographic module according to an embodiment of the present disclosure. Referring to FIG. 1, the method for protecting a root key of a cryptographic module may include the following steps:

Step S 11: Generate a root key and a first root key component in response to a root key generation instruction.

Step S12: Encrypt the root key by the first root key component to obtain a second root key component.

Step S13: Store the second root key component in a protection area of the security chip, and store the first root key component in a RAM area of the clock chip, where the first root key component disappears due to a power failure in the RAM area when the cryptographic module is illegally operated.

Specifically, when the root key needs to be generated, the root key generation instruction may be sent to the cryptographic module. The cryptographic module may be a mini PCIE crypto card, or the like. The cryptographic module includes the security chip and the clock chip. The security chip includes the protection area. The security chip may be a dedicated cryptographic chip as a primary controller of the cryptographic module. When the root key generation instruction is received, the root key and the first root key component are generated, the root key is encrypted by the first root key component to obtain the second root key component, the second root key component is stored in the protection area of the security chip, and the first root key component is sent to the clock chip.

The clock chip includes the RAM area. The clock chip may be a real-time clock (RTC) chip with a static random-access memory (SRAM) area or the like, and is connected to the security chip by an inter-integrated circuit (I2C) interface or the like. After receiving the first root key component sent by the security chip, the clock chip stores the first root key component in the RAM area of the clock chip, and may specifically store the first root key component in the RAM area of the clock chip by a mask.

It should be noted that the RAM area is a volatile storage area, that is, when a power failure occurs, information in the area disappears completely and cannot be recovered. Therefore, a power supply of the clock chip is set, so that when the cryptographic module is illegally operated, a power failure occurs on the clock chip, so that a power failure occurs in the RAM area, and the first root key component is eliminated. In this way, even if the cryptographic module is illegally operated, an illegal operator cannot obtain the first root key component. Therefore, the second root key component cannot be decrypted by the first root key component to obtain a plaintext root key, so that security of the root key is ensured, and a user key protected by the root key is prevented from being leaked when the root key is illegally obtained, thereby effectively improving security of the cryptographic module.

For example, the clock chip is powered by a battery to maintain content on the clock chip, and a destruction switch is disposed on the cryptographic module. A trigger end of the destruction switch is disposed on a housing, and a control end of the destruction switch is disposed between the battery and a power supply end of the clock chip. Once the destruction switch is triggered, a power failure occurs on the battery, content in the RAM area of the clock chip disappears, and the first root key component disappears, and therefore the illegal operator cannot obtain the first root key component. Alternatively, the housing of the cryptographic module is directly bound to the battery. Once the housing of the cryptographic module is opened, the battery is brought out, so that the battery stops supplying power to the clock chip, content in the RAM area of the clock chip disappears, and the first root key component disappears, and therefore the illegal operator cannot obtain the first root key component. Further, when the power supply of the clock chip is recovered, the root key needs to be regenerated.

In the foregoing embodiment, a root key is encrypted and stored in a protected area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

In some embodiments, the generating a root key and a first root key component includes: generating a first random number and a second random number; and generating the root key according to the first random number, and generating the first root key component according to the second random number.

Specifically, the cryptographic module further includes a random number chip. The random number chip may be a physical noise source chip. The random number chip may be connected to the security chip by a general purpose input output (GPIO) interface, to provide a reliable random number for the security chip. After receiving the root key generation instruction, the security chip may send a random number generation instruction to the random number chip, and the random number chip generates the first random number and the second random number, and feeds back the first random number and the second random number to the security chip. The security chip generates the root key according to the first random number, and generates the first root key component according to the second random number. In a specific example, the random number chip may generate the first random number of 16 bytes and the second random number of 16 bytes. The security chip may directly use the first random number of 16 bytes as the root key, use the second random number of 16 bytes as the first root key component, and store the first root key component in the RAM area of the clock chip.

In the foregoing embodiment, a random number is generated by the random number chip, and the root key and the first root key component are generated by the security chip, so that the first root key component is stored in the RAM area of the clock chip, thereby implementing security protection on the root key. It should be noted that a random number may also be generated by the security chip, which is not specifically limited herein.

In some embodiments, the encrypting the root key by the first root key component to obtain a second root key component includes: determining first identifier information of the security chip; processing the first root key component according to the first identifier information to obtain an intermediate key; and encrypting the root key by the intermediate key to obtain the second root key component.

Specifically, when the root key is encrypted by the first root key component, the security chip may first obtain the first identifier information of the security chip. For example, the first identifier information may be a unique identifier code (UID) of the security chip. Then, the first root key component is processed according to the first identifier information to obtain the intermediate key. For example, the security chip performs the exclusive OR operation on the UID of the security chip and the first root key component to obtain the intermediate key. Finally, the root key is encrypted by the intermediate key to obtain the second root key component. For example, the security chip encrypts the root key by the intermediate key and an SM4 algorithm to obtain the second root key component, and stores the second root key component in the protection area of the security chip, so that the root key is stored in the protection area of the security chip in a ciphertext form, thereby ensuring storage security of the root key.

In the foregoing embodiment, the first root key component is processed by the first identifier information of the security chip to obtain the intermediate key, and the root key is encrypted by the intermediate key to obtain the second root key component. Compared with a manner of directly encrypting the root key by the first root key component, security of the generated second root key component is higher, that is, security of a ciphertext of the root key is higher, thereby making it more difficult to illegally obtain the root key, and further improving security of the root key.

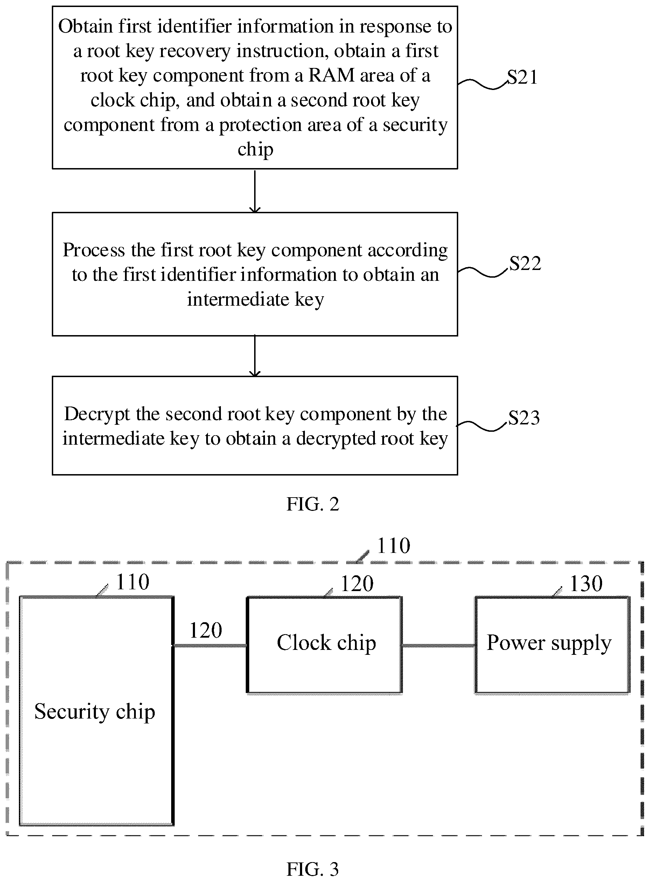

In some embodiments, referring to FIG. 2, the method for protecting a root key of a cryptographic module may further include:
Step S21: Obtain the first identifier information in response to a root key recovery instruction, obtain the first root key component from the RAM area of the clock chip, and obtain the second root key component from the protection area of the security chip.
Step S22: Process the first root key component according to the first identifier information to obtain the intermediate key.
Step S23: Decrypt the second root key component by the intermediate key to obtain a decrypted root key.

Specifically, when the root key needs to be used, the root key needs to be recovered. In this case, the root key recovery instruction may be sent to the cryptographic module. After receiving the root key recovery instruction, the secure chip of the cryptographic module obtains the first identifier information of the secure chip. For example, the first identifier information may be a UID of the secure chip, and reads the first root key component from the RAM area of the clock chip, and reads the second root key component from the protection area of the secure chip. Then, the first root key component is processed according to the first identifier information to obtain the intermediate key. For example, the security chip performs the exclusive OR operation on the UID of the security chip and the first root key component to obtain the intermediate key. Finally, the second root key component is decrypted by the intermediate key to obtain the root key. For example, the security chip decrypts the second root key component by the intermediate key and an SM4 algorithm.

Therefore, the root key is recovered, so that when the root key needs to be used, the cryptographic module can recover the root key according to the recovery instruction, to execute a use procedure of the root key. In this way, a protection function of the root key does not affect normal use of the root key.

In some embodiments, after the generating a root key, the method for protecting a root key of a cryptographic module further includes: determining second identifier information of the security chip; performing a hash operation on the second identifier information to obtain a hash value; and encrypting the hash value by the root key to obtain first verification data, and storing the first verification data in the protected area of the security chip.

Further, after the decrypted root key is obtained through decryption, the method for protecting a root key of a cryptographic module further includes: obtaining the second identifier information, and performing a hash operation on the second identifier information to obtain a hash value; encrypting the hash value by the decrypted root key to obtain second verification data; and performing security verification on the decrypted root key according to the first verification data and the second verification data.

It should be noted that, when the root key is generated, verification data may be further generated, so that when the root key is recovered, security verification is performed on the recovered root key by the verification data, thereby ensuring security of the decrypted root key.

Specifically, after generating the root key, the security chip further obtains the second identifier information of the security chip. For example, the second identifier information may be a sequence number of the security chip. Then the hash operation is performed on the second identifier information to obtain the hash value. For example, the security chip may perform the hash operation on the sequence number of the security chip by an SM3 algorithm to obtain the hash value. Finally, the hash value is encrypted by the root key to obtain the first verification data. For example, the security chip encrypts the hash value by the root key and an SM4 algorithm to obtain the first verification data, and stores the first verification data in the protection area of the security chip.

Further, after obtaining the root key through decryption, the security chip further obtains the second identifier information of the security chip. For example, the second identifier information may be a sequence number of the security chip. Then the hash operation is performed on the second identifier information to obtain the hash value. For example, the security chip may perform the hash operation on the sequence number of the security chip by an SM3 algorithm to obtain the hash value. Then, the hash value is encrypted by the decrypted root key to obtain the second verification data. For example, the security chip encrypts the hash value by the decrypted root key and an SM4 algorithm to obtain the second verification data. Finally, the security chip obtains the first verification data from the protection area of the security chip, and compares the first verification data with the second verification data to determine whether the first verification data is consistent with the second verification data. If yes, it indicates that the decrypted root key is the same as the generated root key. In this case, the decrypted root key is allowed to be used to execute a subsequent application procedure. If no, it is considered that the decrypted root key may be tampered with. In this case, the cryptographic module may be directly closed, to prevent a user key from being leaked due to illegal tampering on the root key and avoid a loss to the user.

In the foregoing embodiment, security verification is performed on the decrypted root key, to ensure security of the recovered root key, so as to prevent a user key from being leaked due to illegal tampering on the root key and avoid a loss to the user.

In conclusion, according to the method for protecting a root key of a cryptographic module in this embodiment of the present disclosure, a first root key component is generated, a root key is encrypted by the component to generate a second root key component, and the two components are separately stored on a clock chip and a security chip. The root key is recovered from the security chip only when the root key is used. Once a cryptographic module is illegally operated, for example, forcibly removed, the first root key component stored in a RAM area of the clock chip disappears, and therefore an illegal operator cannot decrypt the second root key component to obtain the root key, thereby ensuring that the root key of the cryptographic module is not forcibly obtained, and improving security of the cryptographic module.

FIG. 3 is a schematic structural diagram of a cryptographic module according to an embodiment of the present disclosure. Referring to FIG. 3, the cryptographic module 100 includes a security chip 110, a clock chip 120, and a power supply 130.

The security chip 110 is configured to generate a root key and a first root key component in response to a root key generation instruction, encrypt the root key by the first root key component to obtain a second root key component, and store the second root key component in a protection area of the security chip; the clock chip 120 is configured to store the first root key component in a RAM area of the clock chip; and the power supply 130 is configured to supply power to the clock chip, and when the cryptographic module is illegally operated, stop supplying power to the clock chip, enabling the first root key component to disappear due to a power failure in the RAM area of the clock chip 120.

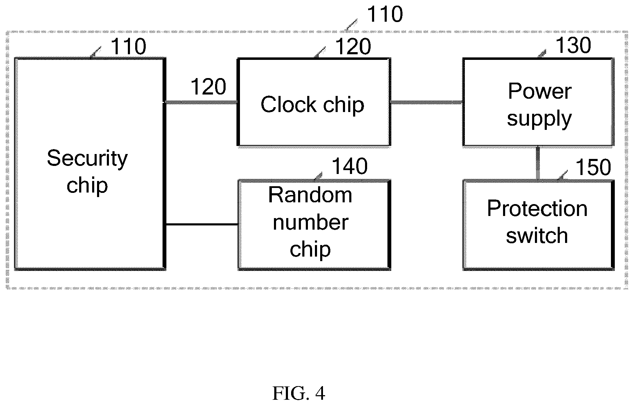

According to an embodiment of the present disclosure, referring to FIG. 4, the cryptographic module 100 further includes a random number chip 140, configured to generate a first random number and a second random number. The security chip 110 is specifically configured to generate the root key according to the first random number, and generate the first root key component according to the second random number.

According to an embodiment of the present disclosure, the security chip 110 is specifically configured to determine first identifier information of the security chip; process the first root key component according to the first identifier information to obtain an intermediate key; and encrypt the root key by the intermediate key to obtain the second root key component.

According to an embodiment of the present disclosure, the security chip 110 is further configured to obtain the first identifier information in response to a root key recovery instruction, obtain the first root key component from the RAM area of the clock chip 120, and obtain the second root key component from the protection area of the security chip; process the first root key component according to the first identifier information to obtain the intermediate key; and decrypt the second root key component by the intermediate key to obtain a decrypted root key.

According to an embodiment of the present disclosure, the security chip 110 is further configured to determine second identifier information of the security chip 110; perform a hash operation on the second identifier information to obtain a hash value; and encrypt the hash value by the root key to obtain first verification data, and store the first verification data in the protection area of the security chip.

According to an embodiment of the present disclosure, the security chip 110 is further configured to obtain the second identifier information, and perform a hash operation on the second identifier information to obtain a hash value; encrypt the hash value by the decrypted root key to obtain second verification data; and perform security verification on the decrypted root key according to the first verification data and the second verification data.

According to an embodiment of the present disclosure, the security chip 110 is specifically configured to perform exclusive OR processing on the first identifier information and the first root key component to obtain the intermediate key.

According to an embodiment of the present disclosure, referring to FIG. 4, the cryptographic module 100 further includes a protection switch 150, where the protection switch 150 is configured to: when the cryptographic module is illegally operated, control the power supply 130 to stop supplying power to the clock chip 120.

It should be noted that for the descriptions of the cryptographic module in this application, refer to the descriptions of the method for protecting a root key of a cryptographic module in this application. Details are not described herein again.

According to the cryptographic module in this embodiment of the present disclosure, a root key is encrypted and stored in a protection area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

In some embodiments, a computer-readable storage medium is further provided. A program for protecting a root key of a cryptographic module is stored on the computer-readable storage medium, and the program for protecting a root key of a cryptographic module is executed by a processor to implement the foregoing method for protecting a root key of a cryptographic module.

According to the computer-readable storage medium in this embodiment of the present disclosure, by the foregoing method for protecting a root key of a cryptographic module, a root key is encrypted and stored in a protection area of a security chip, and a first root key component used for encrypting the root key is stored in a RAM area of a clock chip. In this way, even if the cryptographic module is illegally obtained, because the first root key component disappears due to a power failure in the RAM area when the cryptographic module is illegally operated, an illegal operator cannot decrypt the encrypted root key to obtain the root key. In this way, security protection on the root key is implemented, and a user key protected by the root key is prevented from being leaked when the root key is illegally obtained, thereby effectively improving security of the cryptographic module.

It should be noted that logic and/or steps shown in the flowcharts or described herein in other manners, for example, may be considered as a program list of executable instructions that are used to implement logical functions, and may be specifically implemented on any computer-readable medium, for an instruction execution system, apparatus, or device (for example, a computer-based system, a system including a processor, or another system that can fetch instructions from the instruction execution system, apparatus, or device and execute the instructions) to use, or for a combination of the instruction execution system, apparatus, or device to use. In terms of this specification, the "computer-readable medium" may be any apparatus that may include, store, communicate, propagate, or transmit programs, for the instruction execution system, apparatus, or device to use, or for a combination of the instruction execution system, apparatus, or device to use. More specific examples (this list is not exhaustive) of the computer-readable medium include the following: an electrical portion (an electrical apparatus) with one or more buses, a portable computer cartridge (an magnetic apparatus), a random-access memory (RAM), a read-only memory (ROM), an electrically erasable programmable read-only memory (EPROM or flash memory), an optical fiber apparatus, and a compact disc read-only memory (CDROM). In addition, the computer-readable medium may even be a piece of paper on which the programs can be printed or another appropriate medium, because, for example, optical scanning may be performed on the paper or the another medium, then processing, such as edition, decoding, or another appropriate means when necessary, may be performed to obtain the programs in an electrical manner, and then the programs are stored in a computer storage.

In descriptions in this specification, descriptions about such reference terms as "an embodiment", "some embodiments", "an example", "a specific example", and "some examples" mean that specific features, structures, materials, or characteristics described with reference to the embodiments or examples are included in at least one embodiment or example of the present disclosure. In this specification, the foregoing example expressions of the terms are not necessarily with respect to a same embodiment or example. In addition, the described specific features, structures, materials, or characteristics may be combined in a proper manner in any one or more of the embodiments or examples.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the descriptions about the present disclosure, "multiple" means at least two, for example, two or three, unless otherwise specifically limited.

Although the embodiments of the present disclosure are shown and described above, it can be understood that, the foregoing embodiments are examples, and cannot be construed as a limitation to the present disclosure. Within the scope of the present disclosure, a person of ordinary skill in the art may make changes, modifications, replacement, and variations to the foregoing embodiments.

## Claims

1. A method for protecting a root key of a cryptographic module, wherein the cryptographic module comprises a security chip and a clock chip, and the method comprises:
generating a root key and a first root key component in response to a root key generation instruction;
encrypting the root key by the first root key component to obtain a second root key component; and
storing the second root key component in a protection area of the security chip, and storing the first root key component in a random access memory, RAM, area of the clock chip, wherein the first root key component disappears due to a power failure in the RAM area when the cryptographic module is illegally operated.

2. The method for protecting a root key of a cryptographic module according to claim 1, wherein the generating a root key and a first root key component comprises:
generating a first random number and a second random number; and
generating the root key according to the first random number, and generating the first root key component according to the second random number.

3. The method for protecting a root key of a cryptographic module according to claim 1 or 2, wherein the encrypting the root key by the first root key component to obtain a second root key component comprises:
determining first identifier information of the security chip;
processing the first root key component according to the first identifier information to obtain an intermediate key; and
encrypting the root key by the intermediate key to obtain the second root key component.

4. The method for protecting a root key of a cryptographic module according to claim 3, wherein the method further comprises:
obtaining the first identifier information in response to a root key recovery instruction, obtaining the first root key component from the RAM area of the clock chip, and obtaining the second root key component from the protection area of the security chip;
processing the first root key component according to the first identifier information to obtain the intermediate key; and
decrypting the second root key component by the intermediate key to obtain a decrypted root key.

5. The method for protecting a root key of a cryptographic module according to claim 4, wherein after the generating a root key, the method further comprises:
determining second identifier information of the security chip;
performing a hash operation on the second identifier information to obtain a hash value; and
encrypting the hash value by the root key to obtain first verification data, and storing the first verification data in the protection area of the security chip.

6. The method for protecting a root key of a cryptographic module according to claim 5, wherein after the decrypted root key is obtained through decryption, the method further comprises:
obtaining the second identifier information, and performing a hash operation on the second identifier information to obtain a hash value;
encrypting the hash value by the decrypted root key to obtain second verification data; and
performing security verification on the decrypted root key according to the first verification data and the second verification data.

7. The method for protecting a root key of a cryptographic module according to claim 4, wherein the processing the first root key component according to the first identifier information to obtain the intermediate key comprises:
performing exclusive OR processing on the first identifier information and the first root key component to obtain the intermediate key.

8. A cryptographic module, wherein the cryptographic module comprises:
a security chip, configured to generate a root key and a first root key component in response to a root key generation instruction, encrypt the root key by the first root key component to obtain a second root key component, and store the second root key component in a protection area of the security chip;
a clock chip, configured to store the first root key component in a RAM area of the clock chip; and
a power supply, configured to supply power to the clock chip, and when the cryptographic module is illegally operated, stop supplying power to the clock chip, enabling the first root key component to disappear due to a power failure in the RAM area of the clock chip.

9. The cryptographic module according to claim 8, wherein the cryptographic module further comprises:
a random number chip, configured to generate a first random number and a second random number, wherein
the security chip is specifically configured to generate the root key according to the first random number, and generate the first root key component according to the second random number.

10. The cryptographic module according to claim 8 or 9, wherein the security chip is specifically configured to:
determine first identifier information of the security chip;
process the first root key component according to the first identifier information to obtain an intermediate key; and
encrypt the root key by the intermediate key to obtain the second root key component.

11. The cryptographic module according to claim 10, wherein the security chip is further configured to:
obtain the first identifier information in response to a root key recovery instruction, obtain the first root key component from the RAM area of the clock chip, and obtain the second root key component from the protection area of the security chip;
process the first root key component according to the first identifier information to obtain the intermediate key; and
decrypt the second root key component by the intermediate key to obtain a decrypted root key.

12. The cryptographic module according to claim 11, wherein the security chip is further configured to:
determine second identifier information of the security chip;
perform a hash operation on the second identifier information to obtain a hash value; and
encrypt the hash value by the root key to obtain first verification data, and store the first verification data in the protection area of the security chip.

13. The cryptographic module according to claim 12, wherein the security chip is further configured to:
obtain the second identifier information, and perform a hash operation on the second identifier information to obtain a hash value;
encrypt the hash value by the decrypted root key to obtain second verification data; and
perform security verification on the decrypted root key according to the first verification data and the second verification data.

14. The cryptographic module according to claim 11, wherein the security chip is specifically configured to:
perform exclusive OR processing on the first identifier information and the first root key component to obtain the intermediate key.

15. The cryptographic module according to claim 8, wherein the cryptographic module further comprises:
a protection switch, wherein the protection switch is configured to: when the cryptographic module is illegally operated, control the power supply to stop supplying power to the clock chip.

16. A computer-readable storage medium, wherein a program for protecting a root key of a cryptographic module is stored on the computer-readable storage medium, and the program for protecting a root key of a cryptographic module is executed by a processor to implement the method for protecting a root key of a cryptographic module according to any one of claims 1 to 7.
